# EUROPEAN PATENT APPLICATION

(11) **EP 4 645 863 A1**
(43) Date of publication of application: **05.11.2025**
(21) Application number: 22969847.7
(22) Date of filing: 30.12.2022
(51) Int. Cl.: H04N 19/593, H04L 27/00

(54) **INTRA PREDICTION METHOD AND APPARATUS, VIDEO ENCODING METHOD AND APPARATUS, VIDEO DECODING METHOD AND APPARATUS, AND SYSTEM**

(71) Applicant: GUANGDONG OPPO MOBILE TELECOMMUNICATIONS CORP., LTD., Dongguan, Guangdong 523860 (CN)
(72) Inventor: WANG, Fan, Dongguan, Guangdong 523860 (CN)
(74) Representative: RGTH
(86) International application number: PCT/CN2022/144226
(87) International publication number: WO 2024/138705

(57) **Abstract**

An intra prediction method and apparatus, a video encoding method and apparatus, a video decoding method and apparatus, and a system. When intra prediction is performed on a current block, an intra prediction mode corresponding to a reconstructed block is acquired, and intra prediction mode derivation of the current block is performed on the basis of the intra prediction mode corresponding to the reconstructed block, wherein the intra prediction mode corresponding to the reconstructed block is determined according to a reconstructed sample of the reconstructed block.

## Description

### TECHNICAL FIELD

Embodiments of the present disclosure relate to, but are not limited to, video technology, and more particularly, to an intra prediction method, a video encoding method, a video decoding method, an apparatus, and a system.

### BACKGROUND

The main purpose of digital video compression technology is to compress huge digital image video data to facilitate transmission and storage. At present, general video coding standards, such as H.266/Versatile Video Coding (versatile video coding, VVC), all adopt a block-based hybrid coding framework. Each picture in a video is partitioned into square largest coding units (LCUs) of the same size (e.g., 128×128, or 64×64). Each largest coding unit may be partitioned into rectangular coding units (CUs) according to a rule. A coding unit may also be partitioned into prediction units (PUs), transform units (TUs), etc. The hybrid coding framework includes a prediction module, a transform module, a quantization module, an entropy coding module, an in loop filter module, and the like. The prediction module includes intra prediction and inter prediction which are used for reducing or removing inherent redundancy in the video. Inter prediction includes motion estimation and motion compensation. Since there is a strong correlation between neighboring samples of a picture in a video, a method of intra prediction is used in the video coding technology to eliminate spatial redundancy between the neighboring samples. Since there is a strong similarity between neighboring pictures in a video, a method of inter prediction is used in the video coding technology to eliminate temporal redundancy between the neighboring pictures, thereby improving coding efficiency. Corresponding to a prediction signal, residual information is transformed, quantized and entropy coded in a unit of a block, and encoded into a bitstream.

With the explosion of Internet video and the increasing demand of people for video clarity, although the existing digital video compression standards can save amount of video data, there is still a need to pursue better digital video compression technology to reduce the bandwidth and traffic pressure of digital video transmission.

### SUMMARY

The following is the summary of the subjects described in detail in the present disclosure. The summary is not intended to limit the scope of claims.

An intra prediction method is provided by an embodiment of the present disclosure, including:
obtaining an intra prediction mode corresponding to a reconstructed block, where the intra prediction mode corresponding to the reconstructed block is determined according to a reconstructed sample of the reconstructed block, and the reconstructed block is an encoded block or a decoded block; and
deriving an intra prediction mode of a current block based on the intra prediction mode corresponding to the reconstructed block.

A video decoding method is further provided by an embodiment of the present disclosure, including:
determining that an intra prediction mode of a current block needs to be derived based on a reconstructed sample;
obtaining an intra prediction mode corresponding to a reconstructed block based on the intra prediction method described in any embodiment of the present disclosure, and deriving the intra prediction mode of the current block based on the intra prediction mode corresponding to the reconstructed block; and
performing intra prediction on the current block according to the intra prediction mode used for the current block determined by deriving the intra prediction mode.

A video encoding method is further provided by an embodiment of the present disclosure, including:
determining that an intra prediction mode coding of a current block needs to be derived based on a reconstructed sample; and
obtaining an intra prediction mode corresponding to a reconstructed block based on the intra prediction method described in any embodiment of the present disclosure, and deriving the intra prediction mode of the current block based on the intra prediction mode corresponding to the reconstructed block.

An intra prediction apparatus is further provided by an embodiment of the present disclosure, including a processor and a memory storing a computer program, where when the computer program is executed by the processor, the intra prediction method as described in any embodiment of the present disclosure is implemented.

A video decoding apparatus is further provided by an embodiment of the present disclosure, including a processor and a memory storing a computer program, where when the computer program is executed by the processor, the video decoding method as described in any embodiment of the present disclosure is implemented.

A video encoding apparatus is further provided by an embodiment of the present disclosure, including a processor and a memory storing a computer program, where when the computer program is executed by the processor, the video encoding method as described in any embodiment of the present disclosure is implemented.

A video coding system is further provided by an embodiment of the present disclosure, which includes the video encoding apparatus described in any embodiment of the present disclosure and the video decoding apparatus described in any embodiment of the present disclosure.

A non-transitory computer-readable storage medium is further provided by an embodiment of the present disclosure, where the computer-readable storage medium stores a computer program, when the computer program is executed by a processor, the intra prediction method as described in any embodiment of the present disclosure is implemented, or the video decoding method as described in any embodiment of the present disclosure is implemented, or the video encoding method as described in any embodiment of the present disclosure is implemented.

A computer program product is further provided by an embodiment of the present disclosure, including a computer program, where the computer program is executed by a processor, the intra prediction method as described in any embodiment of the present disclosure is implemented, or the video decoding method as described in any embodiment of the present disclosure is implemented, or the video encoding method as described in any embodiment of the present disclosure is implemented.

Other aspects will be apparent upon reading and understanding the drawings and detailed description.

### BRIEF DESCRIPTION OF THE DRAWINGS

The accompanying drawings are used to provide understandings of embodiments of the present disclosure and constitute a part of the description, and are used to explain the technical solutions of the present disclosure together with the embodiments of the present disclosure, but are not constitute a limitation to the technical solutions of the present disclosure.
FIG. 1A is a schematic diagram of a coding system according to an embodiment of the present disclosure.
FIG. 1B is a framework diagram of an encoding end according to an embodiment of the present disclosure.
FIG. 1C is a framework diagram of a decoding end according to an embodiment of the present disclosure.
FIG. 2A is a schematic diagram of predicting a current block using an intra prediction method.
FIG. 2B is a schematic diagram of predicting a current block using a multi reference line intra prediction method.
FIG. 3 is a schematic diagram of a traditional intra mode used in a non-wide angular mode in VVC.
FIG. 4 is a schematic diagram of a traditional intra mode used in a wide angular mode in VVC.
FIG. 5 is a schematic diagram of a traditional intra mode used by AVS3.
FIG. 6 is a schematic diagram of intra mode derivation based on a TIMD mode.
FIG. 7 is a schematic diagram of intra mode derivation based on a DIMD mode.
FIG. 8 is a schematic diagram of intra prediction based on an IBC mode.
FIG. 9 is a schematic diagram of inter prediction based on template matching technology.
FIG. 10 is a schematic diagram of intra prediction based on an intraTMP mode.
FIG. 11 is a weight diagram of 64 modes of GPM on square blocks.
FIG. 12 is a weight diagram of 56 modes of AWP on square blocks.
FIG. 13 is a schematic diagram of neighboring position coordinates when constructing an MPM list.
FIG. 14 is a flowchart of an intra prediction method of an embodiment of the present disclosure.
FIG. 15 is a flowchart of a video decoding method of an embodiment of the present disclosure.
FIG. 16 is a flowchart of a video encoding method of an embodiment of the present disclosure.
FIG. 17 is a module diagram of an intra prediction apparatus of an embodiment of the present disclosure.

### DETAILED DESCRIPTION

Multiple embodiments are described in the present disclosure, but the description is exemplary rather than limiting, and it is apparent to those skilled in the art that there may be more embodiments and implementations within the scope of the embodiments described in the present disclosure.

In the description of the present disclosure, words such as "exemplary" or "for example" are used to indicate examples, instances or illustrations. Any embodiment described in the present disclosure as "exemplary" or "for example" should not be construed as preferred or advantageous over other embodiments. The term "and/or" in the present disclosure is a description of the association relationship of associated objects, indicating that there may be three relationships. For example, A and/or B may mean three cases: A alone, A and B both, and B alone. "Plurality/multiple" means two or more than two. In addition, in order to clearly describe the technical solutions of the embodiments of the present disclosure, words such as "first" and "second" are used to distinguish between identical or similar items with substantially the same functions and effects. Those skilled in the art may understand that the words "first", "second", etc. do not limit the quantity and execution order, and do not necessarily limit the differences.

In the present disclosure, the description "including any one or more of the following: option one, option two, ..." or the description "including any one or more of option one, option two, ..." means including any one of the listed options, or any combination of multiple of the listed options. For example, the description "including any one or more of the following: A, or B" or "including any one or more of A or B" means including only A, or only B, or including both A and B; for another example, "including any one or more of the following: A, B, or C" or "including any one or more of A, B, or C" means including only A, or only B, or only C, or including A and B, or including A and C, or including B and C, or including A, B and C. The same goes for more options.

In describing representative exemplary embodiments, the method and/or process may have been presented as a particular sequence of steps in the description. However, to the extent that the method or process does not depend on a specific order of steps described herein, the method or process should not be limited to the specific order of steps described. As will be understood by those skilled in the art, other sequences of steps are possible. Therefore, the specific order of the steps in the description should not be construed as limitations on the claims. Furthermore, claims directed to the method and/or process should not be limited to performing their steps in the specific order, and those skilled in the art may readily understand that the order can be changed, and still remain within the spirit and scope of the embodiments of the present disclosure.

The intra prediction method, video encoding method, and video decoding method of the embodiments of the present disclosure may be applied to various video coding standards, such as: H.264/Advanced Video Coding (advanced video coding, AVC), H.265/High Efficiency Video Coding (high efficiency video coding, HEVC), H.266/Versatile Video Coding (versatile video coding, VVC), Audio Video Coding Standard ( audio video coding standard, AVS), other standards developed by Moving Picture Experts Group (moving picture experts group, MPEG), Alliance for Open Media (alliance for open media, AOM), and Joint Video Experts Team (joint video experts team, JVET), extensions of these standards, or any other customized standards.

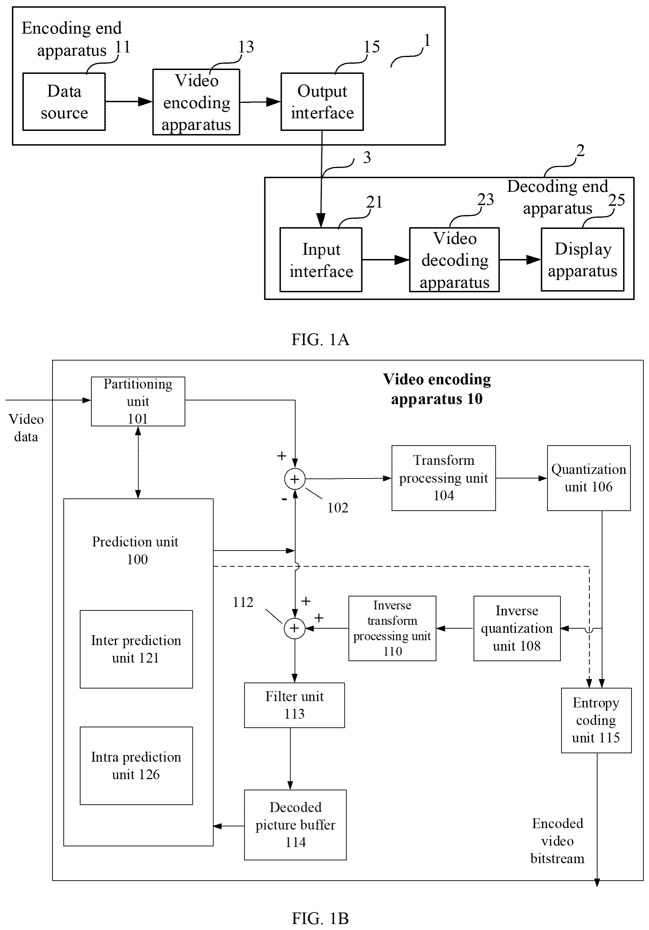

FIG. 1A is a block diagram of a video coding system which may be applied for the embodiments of the present disclosure. As illustrated in the figure, the system includes an encoding end 1 and a decoding end 2, the encoding end 1 generates a bitstream, and the decoding end 2 may decode the bitstream. The decoding end 2 may receive the bitstream from the encoding end 1 via a link 3. Link 3 includes one or more media or apparatus capable of transferring the bitstream from encoding end 1 to decoding end 2. In an example, link 3 includes one or more communication media enabling encoding end 1 to transmit a bitstream directly to decoding end 2. The encoding end 1 modulates the bitstream according to a communication standard and transmits the modulated bitstream to the decoding end 2. The one or more communication media may include wireless and/or wired communication media, and may form part of a packet network. In another example, the bitstream may be output from an output interface 15 to a storage apparatus, and the decoding end 2 may read the stored data from the storage apparatus via streaming or downloading.

As illustrated in the figure, the encoding end 1 includes a data source 11, a video encoding apparatus 13 and an output interface 15. The data source 11 includes a video capture apparatus (e.g., a camera), an archive containing previously captured data, a feed interface for receiving data from a content provider, a computer graphics system for generating data, or a combination of these sources. The video encoding apparatus 13 may also be referred to as a video encoding end, and is configured to encode the data from the data source 11 and output the encoded data to the output interface 15. The output interface 15 may include at least one of a regulator, a modem, or a transmitter. The decoding end 2 includes an input interface 21, a video decoding apparatus 23 and a display apparatus 25. The input interface 21 includes at least one of a receiver or a modem. The input interface 21 may receive the bitstream via the link 3 or from the storage apparatus. The video decoding apparatus 23 is also called a video decoding end, and is configured to decode the received bitstream. The display apparatus 25 is configured to display the decoded data. The display apparatus 25 may be integrated with other apparatuses of the decoding end 2 or may be set separately. The display apparatus 25 is optional for the decoding end. In other examples, the decoding end may include other apparatuses or devices on which the decoded data is applied.

FIG. 1B is a framework diagram of an exemplary video encoding apparatus that may be applied for the embodiments of the present disclosure. As illustrated in the figure, the video encoding apparatus 10 includes following units.

A partitioning unit 101, which is configured to cooperate with a prediction unit 100 to partition received video data into slices, coding tree units (CTUs) or other larger units. The received video data may be a video sequence including video pictures such as I pictures, P pictures, or B pictures.

The prediction unit 100, which is configured to partition a CTU into coding units (CUs), and perform intra prediction encoding or inter prediction encoding on the CUs. In a case where intra prediction or inter prediction is performed on a CU, the CU may be partitioned into one or more prediction units (PUs).

The prediction unit 100 includes an inter prediction unit 121 and an intra prediction unit 126.

The inter prediction unit 121, which is configured to perform inter prediction on a PU, to generate prediction data of the PU. The prediction data includes a prediction block of the PU, motion information of the PU, and various syntax elements. The inter prediction unit 121 may include a motion estimation (ME) unit and a motion compensation (MC) unit. The motion estimation unit may be configured for motion estimation to generate a motion vector, and the motion compensation unit may be configured to obtain or generate a prediction block according to the motion vector.

The intra prediction unit 126, which is configured to perform intra prediction on a PU, to generate prediction data of the PU. The prediction data of the PU may include a prediction block of the PU and various syntax elements.

A residual generating unit 102 (illustrated by a circle with a plus sign after the partitioning unit 101 in the figure), which is configured to generate a residual block of the CU based on an original block of the CU minus the prediction block of the PU into which the CU is partitioned.

A transform processing unit 104, which is configured to partition a CU into one or more transform units (TUs). The partition of the transform unit and the partition of the prediction unit may be different. A residual block associated with a TU is a sub-block obtained by partitioning a residual block of a CU. A coefficient block associated with the TU is generated by applying one or more transforms to the residual block associated with the TU.

A quantization unit 106, which is configured to quantize coefficients in a coefficient block based on a quantization parameter. The quantization degree of the coefficient block may be changed by adjusting a quantization parameter (quantizer parameter, QP).

An inverse quantization unit 108 and an inverse transform unit 110, which are respectively configured to apply inverse quantization and inverse transform to the coefficient block, to obtain a reconstructed residual block associated with the TU.

A reconstruction unit 112 (illustrated by a circle with a plus sign after the inverse transform processing unit 110 in the figure), which is configured to add the reconstructed residual block and the prediction block generated by the prediction unit 100, to generate a reconstructed picture.

A filter unit 113, which is configured to perform in loop filter on the reconstructed picture.

A decoded picture buffer 114, which is configured to store the reconstructed picture after in loop filter. The intra prediction unit 126 may extract a reference picture of a block neighboring a current block from the decoded picture buffer 114, to perform intra prediction. The inter prediction unit 121 may perform inter prediction on a PU of a current picture using a reference picture of a previous picture buffered by the decoded picture buffer 114.

An entropy coding unit 115, which is configured to perform an entropy coding operation on received data (such as syntax elements, quantized coefficient blocks, or motion information), to generate a video bitstream.

**In** other examples, the video encoding apparatus 10 may include more, fewer, or different functional components than the above example, for example, the transform processing unit 104 and the inverse transform processing unit 110 is eliminated.

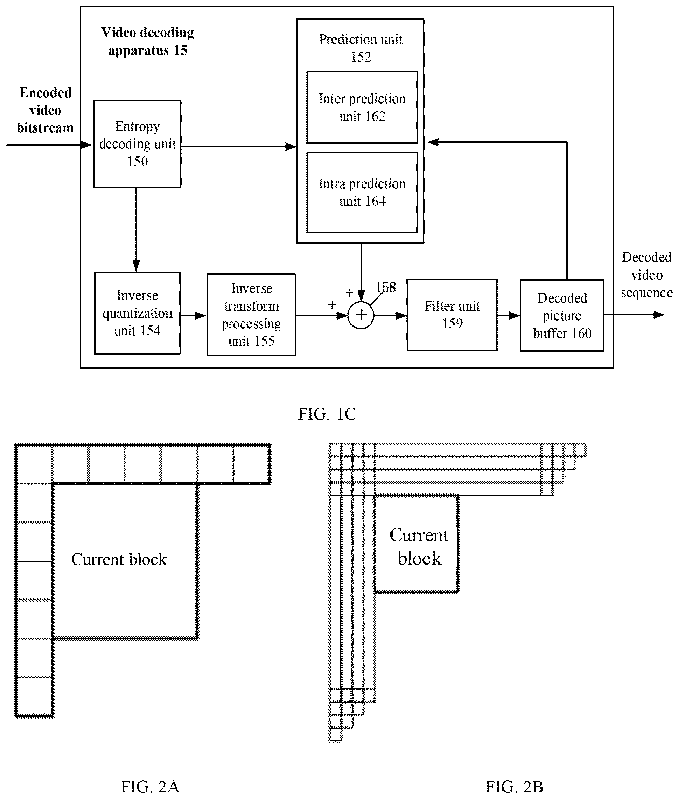

FIG. 1C is a framework diagram of an exemplary video decoding apparatus that may be applied for the embodiments of the present disclosure. As illustrated in the figure, the video decoding apparatus 15 includes following units.

An entropy decoding unit 150, which is configured to perform entropy decoding on an encoded video bitstream which has been received, to extract syntax elements, quantized coefficient blocks, motion information of a PU, or the like. A prediction unit 152, an inverse quantization unit 154, an inverse transform processing unit 156, a reconstruction unit 158 and a filter unit 159 may all perform corresponding operations based on the syntax elements extracted from the bitstream.

The inverse quantization unit 154, which is configured to perform inverse quantization on a quantized coefficient block associated with a TU.

The inverse transform processing unit 156, which is configured to apply one or more kinds of inverse transform to an inverse quantized coefficient block, to generate a reconstructed residual block of a TU.

The prediction unit 152 includes an inter prediction unit 162 and an intra prediction unit 164. If a current block is encoded using intra prediction, the intra prediction unit 164 determines an intra prediction mode of a PU based on syntax elements decoded from the bitstream, and performs intra prediction in combination with reconstructed reference information neighboring the current block obtained from a decoded picture buffer 160. If the current block is encoded using inter prediction, the inter prediction unit 162 determines a reference block of the current block based on motion information of the current block and corresponding syntax elements, and performs inter prediction on the reference block obtained from the decoded picture buffer 160.

The reconstruction unit 158 (illustrated by a circle with a plus sign after the inverse transform processing unit 155 in the figure), which is configured to obtain a reconstructed picture, based on a reconstructed residual block associated with the TU and a prediction block of a current block generated by performing intra prediction or inter prediction by the prediction unit 152.

The filter unit 159, which is configured to perform in loop filter on the reconstructed picture.

The decoded picture buffer 160, which is configured to store a reconstructed picture after in loop filter, which may be used as a reference picture for subsequent motion compensation, intra prediction, inter prediction, etc. The reconstructed picture after in loop filter may also be output as decoded video data for presenting on a display apparatus.

In other embodiments, the video decoding apparatus 15 may include more, fewer or different functional components. For example, the inverse transform processing unit 155 may be eliminated in some cases.

Based on the above-mentioned video encoding apparatus and video decoding apparatus, the following basic coding process may be performed. At the encoding end, a picture is partitioned into blocks, intra prediction or inter prediction or other algorithms are performed on a current block to generate a prediction block of the current block, a residual block is obtained by subtracting the prediction block from the original block of the current block, the residual block is transformed and quantized to obtain a quantization coefficient matrix, and entropy coding is performed on the quantization coefficient matrix to generate a bitstream. At the decoding end, intra prediction or inter prediction is performed on a current block to generate a prediction block of the current block. And inverse quantization and inverse transform is performed on the quantization coefficient matrix obtained by decoding the bitstream to obtain a residual block. The prediction block and the residual block are added to obtain a reconstructed block, where reconstructed blocks constitute a reconstructed picture. Based on a picture or a block, in loop filter is performed on the reconstructed picture to obtain a decoded picture. The encoding end also obtains a decoded picture through operations similar to those of the decoding end, which may also be called a reconstructed picture after in loop filter. The reconstructed picture after in loop filter may be used as a reference picture for inter prediction of subsequent pictures. The block partitioning information determined by the encoding end, the mode information and parameter information of prediction, transform, quantization, entropy coding, in loop filter, determined by the encoding end, may be signaled into the bitstream. The decoding end determines used block partitioning information, the mode information and parameter information of prediction, transform, quantization, entropy coding, in loop filter by decoding the bitstream or analyzing the existing information, to ensure that the decoded picture obtained by the encoding end is the same as the decoded picture obtained by the decoding end.

Although an example of a block-based hybrid coding framework is given above, the embodiments of the present disclosure are not limited thereto. With development of the technology, one or more modules in the framework, and one or more steps in the process may be replaced or optimized. The embodiments of the present disclosure relate to but are not limited to the intra prediction units in the above encoding end and decoding end, and the corresponding intra prediction methods.

Here, the current block may be a current coding unit (CU) of the current picture, a current prediction unit (PU) of the current picture, a coding tree unit (CTU) of the current picture, or a block-level coding unit such as a sub-block into which the current CU or current PU is partitioned.

Here, a reconstructed block refers to an encoded block or a decoded block, and the encoded block or decoded block may be a CU, a PU, or a sub-block into which the CU or PU is partitioned.

Due to the need for parallel processing, a picture may be partitioned into slices, and slices in the same picture may be processed in parallel, which means there is no data dependency between these slices. "Frame" is a common expression, which may generally be understood as one frame is one picture. In the present disclosure, frame may be used to represent a picture or a slice, etc.

### Intra prediction

For the intra prediction mode, reconstructed samples that have been coded around a current block are used as reference samples to predict the current block. An example is illustrated in FIG. 2A, where the 4×4 block is the current block, and the samples in the left column and the top row of the current block are reference samples of the current block. For intra prediction, these reference samples are used for predicting the current block. These reference samples may all be available, i.e., all have been coded. Or some of them may be unavailable, for example, if the current block is the leftmost portion of the whole picture, then the reference samples at the left side of the current block are unavailable. Or when coding the current block, the bottom-left portion of the current block has not been coded, so the reference samples at the bottom-left is also unavailable. In a case where reference samples are unavailable, available reference samples or certain values or methods may be used for filling, or no filling may be performed.

Multiple reference line (MRL) intra prediction mode may use more reference samples to improve coding efficiency. FIG. 2B illustrates an example of using 4 reference rows/columns.

### Traditional intra prediction mode

There are multiple prediction modes for intra prediction. Intra prediction of 4×4 blocks in H.264 includes 9 modes. In mode 0, top samples of a current block are copied in vertical direction to the current block as prediction values; in mode 1, left reference samples are copied in horizontal direction to the current block as prediction values; in mode 2, DC uses an average value of the 8 points A to D and I to L as a prediction value of all points; and for modes 3 to 8, the reference samples are copied to the corresponding positions of the current block at a certain angle. Since some positions of the current block cannot correspond exactly to the reference samples, it may be necessary to use a weighted average of the reference samples, or interpolated sub-samples of the reference samples.

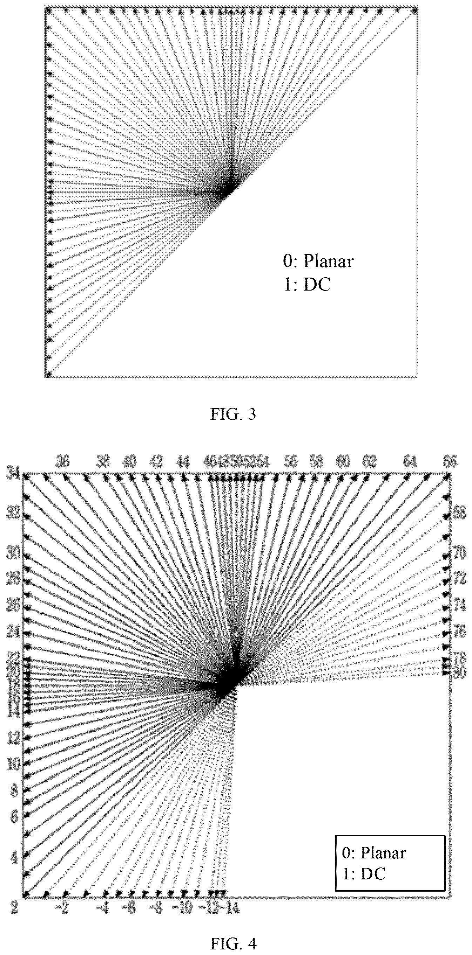

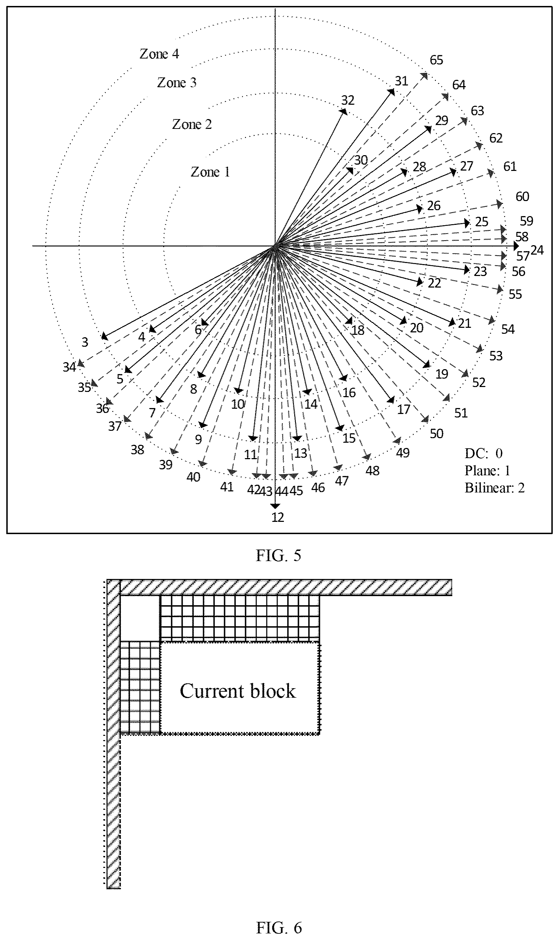

In addition, there are modes such as a mean mode (i.e., a DC mode), a planar mode (e.g., a planar mode, a plane mode), and a bilinear mode (i.e., a Bilinear mode). With the development of technology and the expansion of blocks, there are more and more angle prediction modes. For example, intra prediction modes used in HEVC include the Planar mode, the DC mode, and 33 angle modes, for a total of 35 prediction modes. The intra prediction modes used in VVC include the Planar mode, the DC mode, and 65 angle modes, for a total of 67 prediction modes as illustrated in FIG. 3. In addition to the above 67 modes, in VVC, wide angular modes are provided for some rectangular blocks with a large difference between length and width. For example, the modes indicated by the dotted lines in FIG. 4, i.e., the ranges of -14 to -1 and 67 to 80, will replace some conventional modes. In AVS3, a total of 66 prediction modes are used, including the DC mode, the Plane mode, the Bilinear mode, a pulse code modulation mode (i.e., PCM mode) and 62 angle modes, as illustrated in FIG. 5.

In the present disclosure, the Planar mode, DC mode and 65 angle modes used in VVC; as well as the DC mode, Plane mode, Bilinear mode, PCM mode and 62 angle modes used in AVS3 are referred to as conventional intra prediction modes.

### Intra prediction filter (IPF)

In addition, there are some technologies to improve intra prediction, such as improving sub-sample interpolation of reference samples, filtering prediction samples. Technologies for filtering prediction samples, for example, intra prediction filter (IPF) mode in AVS3, may use reference samples for filtering to generate prediction values. Multiple intra prediction filter (MIPF) in AVS3 uses different filters to generate prediction values for different block sizes. For samples at different positions in the same block, samples closer to the reference sample use one filter to generate prediction values, and samples farther from the reference sample use another filter to generate prediction values.

### Matrix weighted intra prediction (MIP)

Matrix weighted intra prediction (Matrix-based Intra Prediction or Matrix weighted Intra Prediction, MIP) is also an intra prediction mode.

To predict a block with a width of W and a height of H, H reconstructed samples in a left column of the current block and W reconstructed samples in an top row of the current block are needed as input for MIP. Prediction blocks are generated in MIP based on the following 3 steps: reference sample averaging, matrix vector multiplication, and interpolation. MIP may be considered as a process of generating a prediction block using input samples (reference samples) in a matrix vector multiplication manner. A variety of matrices are provided in MIP. Difference in prediction modes are reflected in the differences in the matrices. The same input sample will get different results using different matrices. The process of reference sample averaging and interpolation is a design that compromises performance and complexity. For larger blocks, an effect similar to down-sampling may be achieved by averaging the reference samples, so that the input may fit into a smaller matrix, while interpolation achieves an up-sampling effect. In this way, there is no need to provide different MIP matrices for various block sizes, but only one or several matrices of specific sizes need to be provided. As the demand for compression performance increases and hardware capabilities improve, a more complex MIP may appear in the next generation of standards.

The MIP mode is similar to the planar mode, but obviously, the MIP mode is more complex and more flexible than the planar mode.

### Template-based intra mode derivation (TIMD)

The template-based intra mode derivation (TIMD) technology is illustrated in FIG. 6, a area on the left side of the current block and an area on the top side of the current block are used as templates. Except for boundary cases, when coding the current block, reconstructed values may be obtained based on the left and top sides of the current block theoretically, which is also a basis of the template adaptation method. In the TIMD mode, an area filled with square lines is used as a template, and an area filled with diagonal lines is the reference samples of the template. The decoding end may use a certain intra prediction mode to perform prediction on the template, and compare the prediction value with the reconstructed values to obtain a cost of the intra prediction mode on the template, such as a sum of absolute difference (SAD), a sum of absolute value after hadamard transformed (a sum of absolute transformed difference, SATD), or a sum of squared error (SSE). Since the template and the current block are neighboring and correlated, the performance of a prediction model on the template may be used to estimate its performance on the current block. In the TIMD mode, some candidate intra prediction modes are used for predicting on the template, to obtain their costs on the template, and one or two intra prediction modes with the lowest costs are used as the intra prediction values of the current block.

It is found through researches that if the cost difference between two intra prediction modes on the template is not large, a weighted average of the prediction values of the two intra prediction modes may improve the compression performance. The weights of the prediction values of the two prediction modes are related to the above-mentioned costs, e.g., the weights are inversely proportional to the costs. In general, in the TIMD mode, the prediction effect of the intra prediction mode on the template are used to screen the intra prediction mode, and weighting is performed on the two intra prediction modes according to the cost on the template. The advantage of the TIMD mode is that if the TIMD mode is selected for the current block, it does not need to indicate which specific intra prediction mode is used. Instead, the decoding end derives it through the above process, which saves overhead to a certain extent.

### Decoder-side intra mode derivation (DIMD)

The decoder-side intra mode derivation (DIMD) technology uses reconstructed samples on the left and top of the current block to derive the prediction mode, and instead of predicting on the template, it analyzes gradients of the reconstructed samples.

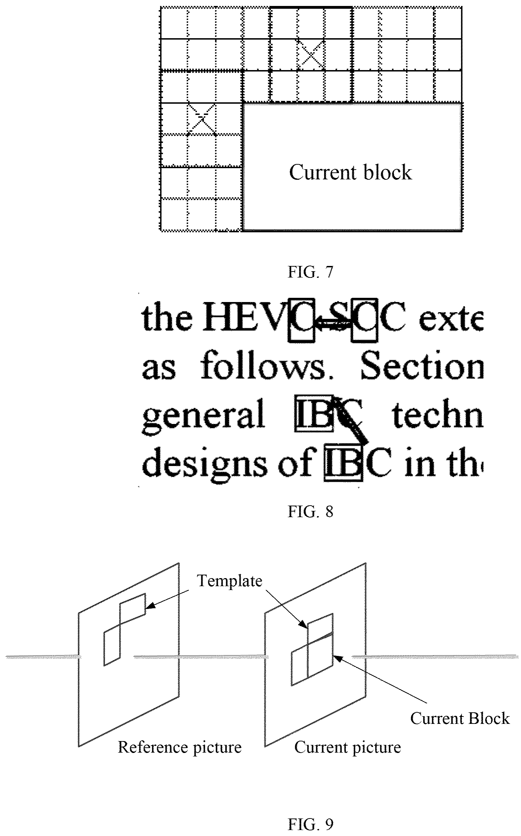

As illustrated in FIG. 7, in the DIMD mode, an angular mode of intra prediction is derived by using reconstructed samples of a template area (the area with 3 top rows and 3 left columns of the current block shown in the figure) neighboring the current block. In the DIMD mode, a horizontal gradient Gx and a vertical gradient Gy of a central sample of each filter (the small square marked with cross lines in the figure) of the sliding horizontal filter and vertical filter (the 3×3 rectangular box in the figure) are calculated in the template area, and the corresponding angle is calculated through an inverse tangent function atan(Gy/Gx), and then it is converted into an angular mode (e.g., one of the 65 angle modes in VVC), which is called an angular mode matched to the central sample. In one example, the horizontal filter and the vertical filter adopt a 3×3 sober filter.

For each angular mode, the absolute values of Gx and Gy of all central samples matching the angular mode are accumulated as accumulated amplitude of the angular mode. For example, there are 3 samples matching an angular mode with index 5, where the horizontal gradient and vertical gradient of the first sample are Gx1 and Gy1, the horizontal gradient and vertical gradient of the second sample are Gx2 and Gy2, and the horizontal gradient and vertical gradient of the third sample are Gx3 and Gy3. Then the accumulated amplitude of the angular mode with index 5 is equal to |Gx1| + |Gy1| + |Gx2| + |Gy2| + |Gx3| + |Gy3|. After analyzing all the central samples, a histogram result may be obtained (the histogram is just to help understanding and may be implemented in many simple forms), which gives accumulated amplitude of each angular mode. In DIMD mode, the two angle modes with the highest accumulated amplitude in the histogram is selected, and weighting the prediction values of a total of three intra prediction modes after adding the planar mode. The weights are related to the results of the analysis.

In the DIMD mode, the gradient analysis of the reconstructed samples around the current block is used to screen the angular mode, and weighting may be performed on the predicted values of the two angular modes and the predicted value of the planar mode, to obtain the prediction value of the DIMD mode. If the DIMD mode is selected for the current block, the encoder does not need to indicate which conventional intra prediction mode is used, the decoder may derive it by itself through the above process, thereby saving overhead.

### Intra block copy (IBC)

Intra block copy (IBC) technology can significantly improve the compression efficiency of screen content coding, therefore, from HEVC to VVC, the IBC mode is used for screen content coding. Screen content is generated by computer, which is different from camera captured content. Screen content does not include noise, includes text, computer graphics, etc., and its boundary is clear. There is a lot of repetitive content in the screen content, as illustrated in FIG. 8.

In inter prediction, a reference block on the reference picture is used as a prediction block of the current block, and the reference picture is not the current picture. In the IBC mode, the method of the inter prediction is used for intra prediction. In the IBC mode, a block is determined from the coded part (also called reconstructed part) of the current picture as the prediction block of the current block. The IBC mode is also called intra picture block compensation mode or current picture referencing (CPR) mode.

In the IBC mode, a block vector (BV) is used to represent a position difference between the current block and the reference block, which is similar to a motion vector (MV) of inter prediction. The encoding end determines an optimal matching block of the current block within a search range by using a block matching method, and encodes the BV. IBC may be considered as an intra prediction method, and may also be considered as another type of prediction method independent of intra prediction and inter prediction.

### Template matching (TM)

The template matching (TM) technology was first used in inter prediction, which uses the correlation between neighboring samples to take some areas neighboring the current block as a template. When the current block is coded, the left side and the top side thereof have already been coded according to the coding order. Certainly, in actual hardware decoding end implementations, there is no guarantee that the left and top neighboring blocks have been decoded when decoding for the current block begins. For example, in HEVC, when generating a prediction block for an inter coded block, the neighboring reconstructed samples are not required, so the prediction process of the inter block may be performed parallel. However, for the intra coded block, the reconstructed samples at the left and top are required as reference samples. Corresponding adjustments to the hardware design may make the reconstructed samples on the left and top of the current block available. However, the reconstructed samples at the right and bottom of the current block are not available under the coding order of existing standards, e.g., VVC.

As illustrated in FIG. 9, the rectangular areas on the left and top of the current block are set as templates. The height of the template on the left is generally the same as the height of the current block, and the width of the template on the top is generally the same as the width of the current block. Alternatively, the template may have a different height or width from the current block. Motion information or a motion vector of the current block is determined by finding the optimal matching position of the template in the reference frame. This process may be generally described as follows. In a certain reference frame, search is performed within a certain range around the initial position starting from an initial position. The search rules may be pre-set, such as the search range, and search steps. Upon moving to a position each time, the matching degree between the template corresponding to the position and the template neighboring the current block is calculated. The matching degree may be measured by some distortion costs, such as SAD, SATD, and mean-square error (MSE). The smaller the value of SAD, SATD, MSE, etc., the higher the matching degree. A cost is calculated using the prediction block of the template corresponding to the position and the reconstructed blocks of the template neighboring the current block. In addition to searching for a position of an integer sample, searching may also be performed for the sub-sample position, and the motion information of the current block may be determined based on the searched position with the highest-probability matching degree. By utilizing the correlation between neighboring samples, the motion information that is appropriate for the template may also be appropriate for the current block.

The template matching method may not necessarily be applicable to all blocks, so some methods may be used to determine whether the template matching method is used for the current block, for example, a control switch is used for the current block to indicate whether the template matching method is used. A classic template matching technology is referred to as DMVD (decoder side motion vector derivation). Both the encoding end and the decoding end may use the template to search thereby deriving motion information or finding better motion information based on the original motion information. It does not need to transmit specific motion vectors or motion vector differences. Instead, both the encoding end and decoding end perform searching with the same rules to ensure consistency between encoding and decoding. The template matching method may improve compression performance, but "searching" further need to be performed on the decoding end, which brings a certain degree of complexity to the decoding end.

### Intra template matching prediction (intraTMP)

The intra template matching prediction (intraTMP) technology is a technology that combines IBC and TM. Applying TM to inter may reduce the overhead of encoding MV. Similarly, applying TM to IBC may reduce the overhead of encoding BV. One example is that there is no need to encode BV, and the matching block found according to TM is directly used as the prediction block of the intraTMP mode of the current block.

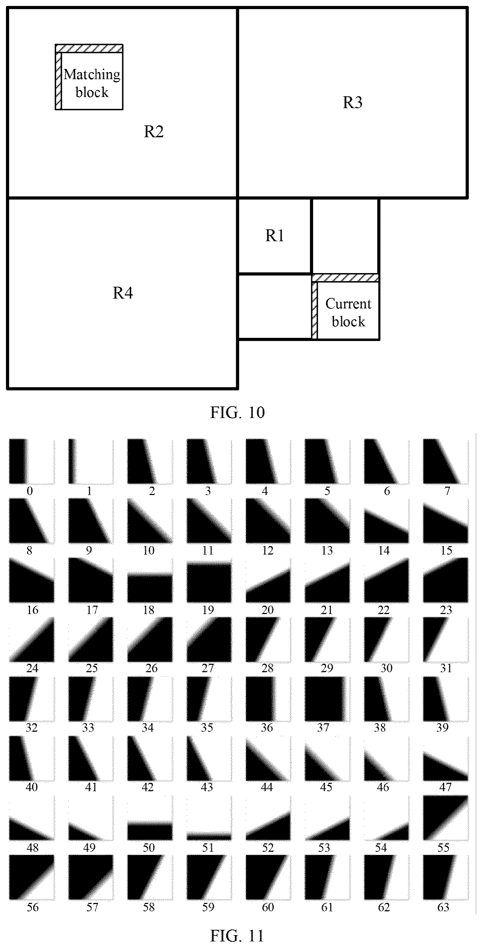

An example of intraTMP is illustrated in FIG. 10. The inverted L-shaped area in the top-left corner of the current block is used as a template to search within the search range. The search range is the reconstructed area. The illustrated search range includes a partial area R1 of the current CTU, a CTU area R2 on the top-left of the current block, a CTU area R3 on the top of the current block, and a CTU area R4 on the left of the current block. This is just an example, the search scope may be different in actual application. In the example illustrated in the figure, the optimal matching block is found in R2.

### Geometric partitioning mode (GPM) and angular weighted prediction (AWP)

In VVC video coding standard, there is an inter prediction mode called GPM (geometric partitioning mode). In AVS3 video coding standard, there is an inter prediction mode called AWP (angular weighted prediction). Although these two modes have different names and specific implementation forms, they have something in common in principle.

Traditional unidirectional prediction only searches for one reference block with the same size as the current block, while conventional bi-directional prediction uses two reference blocks with the same size as the current block, and the sample value of each point in the prediction block is an average of the sample values at the corresponding positions in the two reference blocks, that is, all points of each reference block account for 50%. Bi-directional weighted prediction allows proportions of the two reference blocks to be different, for example, all points in a first reference block account for 75%, and all points in a second reference block account for 25%. However, all points in the same reference block account the same proportion. Some other optimization methods, such as decoder side motion vector refinement (DMVR) and bi-directional optical flow (BIO), will cause some changes in reference samples or prediction samples, but they are not related to the principles mentioned above. BIO may also be abbreviated as BDOF.

Two reference blocks of the same size as the current block also be used for GPM or AWP, but sample values at the corresponding positions of the first reference block are 100% used in some sample position, and sample values at the corresponding positions of the second reference block are 100% used in some sample position. In a boundary area or blending area, the sample values of the corresponding positions of the two reference blocks are used with a certain proportion. The weight of the boundary area also blending gradually. The specific allocation of these weights is determined by the mode of GPM or AWP. The weight of each sample position is determined according to the mode of GPM or AWP. In some cases, for example, in a case where the block size is very small, it may be impossible to guarantee that in the mode of GPM or AWP modes, the sample values at the corresponding positions of the first reference block are 100% used in some sample positions, and the sample values at the corresponding positions of the second reference block are 100% used in some sample positions. It may also be considered that for GPM or AWP, two reference blocks with different sizes from the current block are used, that is, each reference block takes a required part as a reference block. That is, a part of which the weight is not 0 is used as the reference block, and a part a part of which the weight is 0 is removed. The two reference blocks used in GPM or AWP may be prediction blocks of the current block obtained using two prediction modes.

As illustrated in FIG. 11, it is a weight map of 64 modes of GPM on a square block in VVC. Black represents that the weight value of the corresponding position of the first reference block is 0%, white represents that the weight value of the corresponding position of the first reference block is 100%, and the gray area represents that the weight value of the corresponding position of the first reference block is a weight value greater than 0% and less than 100% according to the depth of the color. The weight value of the corresponding position of the second reference block is 100% minus the weight value of the corresponding position of the first reference block.

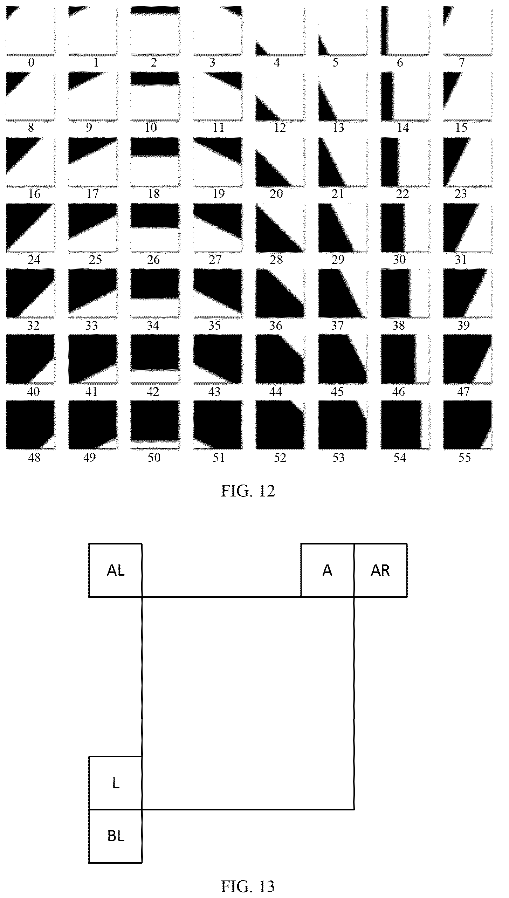

As illustrated in FIG. 12, it is a weight map of 56 modes of AWP on a square block in AVS3. Black represents that the weight value of the corresponding position of the first reference block is 0%, white represents that the weight value of the corresponding position of the first reference block is 100%, and the gray area represents that the weight value of the corresponding position of the first reference block is a weight value greater than 0% and less than 100% according to the depth of the color. The weight value of the corresponding position of the second reference block is 100% minus the weight value of the corresponding position of the first reference block.

The derivation method of weights for GPM and AWP are different. In GPM, the angle and offset are determined for each mode, and then the weight matrix for each mode is calculated. In AWP, it is firstly to make a one-dimensional weight line, and then uses a method similar to intra angular prediction to spread the one-dimensional weight line across the entire matrix.

In the earlier coding standards, there were only rectangular partitioning methods for either CUs, PUs or TUs. However, In GPM and AWP, the predicted non-rectangular partitioning effect is achieved without partitioning. In GPM and AWP, a mask of the weights of two reference blocks is used, namely the weight map or weight matrix mentioned-above. The mask determines the weights of the two reference blocks when generating the prediction block, it may also be simply understood that a portion of the position of the prediction block comes from the first reference block and a portion of the position of the prediction block comes from the second reference block. The blending area is weighted by the corresponding positions of the two reference blocks to make the blending smoother. In GPM and AWP, the current block is not be partitioned into two CUs or PUs according to a partitioning line, therefore in the transform, quantization, inverse transform, inverse quantization, etc. of the residual after prediction, the current block is handled as a whole.

GPM is an inter technology in VVC and may also be used for intra prediction. The two prediction modes of GPM may both be inter prediction modes, or one mode may be an inter prediction mode and another mode may be an intra prediction mode, or both may be intra prediction modes.

### Most probable model (MPM)

The most probable mode (MPM) may be used in intra prediction to improve coding efficiency. In MPM, the intra prediction modes of neighboring encoded blocks or decoded blocks, the intra prediction modes (e.g., neighboring angular modes) derived from the intra prediction modes of neighboring encoded blocks or decoded blocks, and some commonly used or highly likely intra prediction modes such as DC, Planar, or Bilinear mode are used to form an MPM list. The intra prediction mode referring to the neighboring encoded blocks or decoded blocks utilizes the spatial correlation, since the texture has a certain spatial continuity. MPM may be used for intra prediction mode derivation. That is, it is considered that the probability that the intra prediction mode in the MPM list is used for the current block uses is higher than the probability that the intra prediction mode in the MPM list is not used for the current block, and fewer code words may be used during binarization, thereby saving overhead and improving coding efficiency.

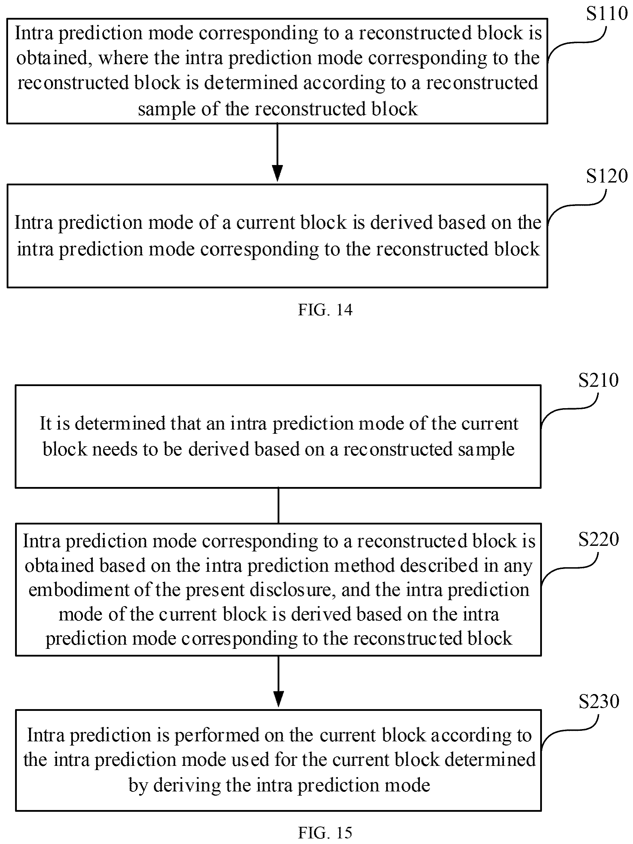

When encoding and decoding the current block, since the left and top areas of the current block have been encoded or decoded, blocks in the left and top areas are usually used when constructing the MPM list. Taking the coordinates of the top-left corner of the current block as (x, y), the width of the current block as width, and the height as height as an example, the blocks with neighboring position coordinates such as (x-1, y-1), (x-1, y+height), (x-1, y+height-1), (x+width, y-1), and (x+width-1, y-1) are usually used. These coordinates correspond to the positions marked with AL, BL, L, Ar, and A in FIG. 14, respectively.

When using the MPM mode, firstly, an MPM list is constructed, and 6 intra prediction modes, that are most likely to be selected by the current block, are filled in the MPM list. Taking constructing the MPM list in VVC as an example, in VVC, firstly, a block-level flag intra_luma_not_planar_flag is used to determine whether the intra prediction mode of the current block is PLANAR, if not, it will constructe a candModeList. It may be understood that the first element of the MPM list is PLANAR, and the subsequent elements are the elements in the candModeList in turn. It may also be understood that the MPM list is candModeList.

In VVC, regardless of whether multiple reference lines (MRL) and intra sub-partitions (ISP) are applied, the MPM list has 6 prediction modes. MPM may be expanded into MPM and secondary MPM, where MPM and Secondary MPM use list of length 6 and list of length 16 respectively. Among the 6 modes in the MPM list, the Planar mode is always filled in the first position in the MPM, and the remaining 5 positions are filled in sequence by the following three steps until all five positions are filled. The remaining modes enter secondary MPM.

In the first step, the intra prediction modes used for prediction blocks at 5 neighboring positions around the current block are filled in sequence; as shown in FIG. 13, the 5 positions include the position of top-left (AL) of the current block, the position of top (A) of the current block, the position of top-right (AR) of the current block, the position of left (L) of the current block and the position of bottom-left (BL) of the current block in sequence.

In the second step, the mode derived from the gradient histogram is used based on the reconstructed samples around the current block.

In the third step, an angular mode that is close to the angular mode selected in the first step is selected.

The secondary MPM list may consist of some main angular modes other than the intra prediction modes in the MPM.

If the intra prediction mode selected for the current block is in the MPM list, only its index number needs to be encoded (only 3 bits are needed). If the intra prediction mode selected for the current block is not in the MPM list but in the 61 non-MPM modes, the intra prediction mode is encoded using a truncated binary code (TBC) in the entropy coding stage.

Among the intra prediction modes described above, the MIP mode is similar to the PLANAR mode, but compared with the PLANAR mode, the MIP has more obvious texture. Moreover, MIP has multiple sub-modes to select, which is different from the PLANAR mode. In the TIMD mode, on the one hand, the information of the template is used to derive the conventional intra prediction mode actually used by the current block, and a TIMD mode flag is used to replace the coding of the conventional intra prediction mode actually used by the current block. If the TIMD mode is used for the current block, one or two intra prediction modes are selected from multiple conventional intra prediction modes using the template matching method of the TIMD mode. On the other hand, in the TIMD mode, a combination of multiple intra prediction modes is used in some case, that is, weighted averaging is performed on the prediction values of multiple intra prediction modes.

Similar to the TIMD mode, in the DIMD mode, the neighboring reconstructed information is used to derive the angular mode actually used by the current block, thereby using a DIMD mode flag instead of the coding of the angular mode actually used by the current block. If the DIMD mode is used for the current block, one to two angle modes are selected from multiple intra prediction modes using the method for analyzing the reconstructed sample gradient in the DIMD mode. On the other hand, in the TIMD mode, a combination of multiple intra prediction modes is used in some case, that is, weighted averaging is performed on the prediction values of multiple intra prediction modes.

The GPM mode used for intra prediction also does not need to encode two specific used intra prediction modes during encoding. Instead, a candidate combination list is calculated using a template, each combination of candidate combination list includes a GPM weight derivation mode and two intra prediction modes. The GPM used for intra prediction only needs to encode an index of the combination used for the current block in the candidate combination list. On the other hand, intra GPM may also use a combination of two conventional intra prediction modes.

The conventional intra prediction mode and other intra prediction modes (also referred to as non-conventional intra prediction modes or non-conventional modes in the present disclosure) are two different types of modes, which are not in the same dimension. Some non-conventional intra prediction modes such as the TIMD, the DIMD, the GPM and the AWP, are still based on a conventional intra prediction mode or a combination of multiple conventional intra prediction modes when calculating a prediction block of a current block. Other non-conventional intra prediction modes such as the MIP, the IntraTmp, use an algorithm different from the conventional intra prediction mode when calculating a prediction block of a current block.

In a case where it is needs to derive the intra prediction mode for the current block based on the reconstructed samples, there may be the following problems.

On the one hand, when constructing the MPM list of the current block, the list is usually filled with conventional intra prediction modes. If the neighboring blocks of the current block use a non-conventional intra prediction mode, it is necessary to determine which intra prediction mode to fill in the MPM list.

On the other hand, there may be more than one texture in one block, the GPM is an example. In a case of determining what mode is used on the neighboring blocks, the entire block is considered as a whole, which is sometimes not accurate enough. For example, in a case where the intra prediction mode of the block neighboring the top-left corner of the current block is added to the MPM list of the current block, the texture characteristics of the intra prediction mode used by the entire block and the texture characteristics of the small block area neighboring the top-left corner of the current block may be different.

And on the other hand, when encoding a block, difference are made between the original block and the prediction block to obtain a residual block, which will be encoded in the bitstream for transmitting through transform and quantization. When decoding, the prediction block and the residual block need to be decoded, and it is needed to add the prediction block and the residual block together to obtain the reconstructed block. For intra encoding, the residuals are generally not all quantized to 0, which means that the texture of the decoded block is not only affected by the prediction mode, but also affected by the residuals. In general, the reconstructed block is closer to the original block than the prediction block.

Based on the above aspects, the method of deriving the intra prediction mode needs to be optimized when using the intra prediction mode of the reconstructed block to derive the intra prediction mode of the current block, such as constructing the MPM list of the current block, or deriving the intra prediction mode of a chroma block at the corresponding position according to the intra prediction mode of the luma block.

To this end, an intra prediction method is provided in an embodiment of the present disclosure, as shown in FIG. 14, the intra prediction method includes following steps.

In step S110, an intra prediction mode corresponding to a reconstructed block is obtained, where the intra prediction mode corresponding to the reconstructed block is determined according to a reconstructed sample of the reconstructed block.

In the present disclosure, the reconstructed block is an encoded block or a decoded block, and the encoded block or decoded block may be a CU, a PU, or a block-level coding unit such as a sub-block into which the CU or PU is partitioned. The reconstructed sample of the reconstructed block may also be referred to as a reconstructed value of a sample in the reconstructed block.

In step S120: an intra prediction mode of a current block is derived based on the intra prediction mode corresponding to the reconstructed block.

Generally, the reconstructed block is closer to an original block than a prediction block. In the embodiments, the intra prediction mode corresponding to the reconstructed block is determined based on the reconstructed sample of the reconstructed block, and the intra prediction mode of the current block is derived based on the intra prediction mode corresponding to the reconstructed block. Texture features of the reconstructed block may be more accurately reflected, and a matching degree between a derivation result of the intra prediction mode of the current block and texture features of the current block may be improved, thereby improving coding efficiency.

In an exemplary embodiment of the present disclosure, the intra prediction mode corresponding to the reconstructed block being determined according to the reconstructed sample of the reconstructed block includes:
taking the reconstructed block as a whole, and determining an intra prediction mode corresponding to the reconstructed block according to reconstructed sample of the reconstructed block; or
partitioning the reconstructed block into multiple sub-blocks, and determining an intra prediction mode corresponding to each of the multiple sub-blocks respectively according to reconstructed samples of the multiple sub-blocks.

The operation of determining the intra prediction mode corresponding to the reconstructed block as a whole is relatively simple, and partitioning the reconstructed block into multiple sub-blocks and determining the intra prediction mode corresponding to each of the multiple sub-blocks may more accurately reflect texture characteristics of local areas in the block. These local areas are usually areas closer to the current block. The intra prediction modes corresponding to the sub-blocks are used for the derivation of the intra prediction mode of the current block, so that the derived intra prediction mode may be more suitable for the intra prediction or intra prediction mode coding of the current block, thereby improving the coding efficiency.

As described above, the reconstructed block may be the sub-block obtained by partitioning the CU or the PU. In the case where the reconstructed block is the sub-block obtained by partitioning the CU or the PU, the reconstructed block is partitioned into multiple sub-blocks, which are sub-blocks obtained by further partitioning the sub-block obtained by partitioning the CU or the PU. In an example of the embodiments, partitioning the reconstructed block into the multiple sub-blocks includes: in a case where a size of the reconstructed block is N times of 4×4, partitioning the reconstructed block into multiple sub-blocks of size 4×4, where N ≥ 2. For example, in a case where an ISP mode is selected when performing intra prediction on a CU, the CU is partitioned into 3 sub-blocks of size 4×8. After encoding or decoding the 3 sub-blocks, in a case where it is necessary to determine intra prediction modes corresponding to the 3 sub-blocks (i.e., reconstructed blocks), each 4×8 sub-block may be further partitioned into 2 sub-blocks of size 4×4. For each of the partitioned 4×4 sub-blocks, an intra prediction mode corresponding to the 4×4 sub-block is determined according to a reconstructed sample of the 4×4 sub-block.

In an exemplary embodiment of the present disclosure, the intra prediction mode corresponding to the reconstructed block is an angular mode.

In an example of the embodiments, the intra prediction mode corresponding to the reconstructed block being determined according to the reconstructed sample of the reconstructed block includes:
determining horizontal gradients and vertical gradients of multiple samples in the reconstructed block according to the reconstructed sample of the reconstructed block;
determining an angular mode to which each of the multiple samples matches according to the horizontal gradients and the vertical gradients of the multiple samples; and
using an angular mode with a largest number of matches or an angular mode with a largest accumulated amplitude as an intra prediction mode corresponding to the reconstructed block;
where an accumulated amplitude of an angular mode is obtained by accumulating absolute values of the horizontal gradients and the absolute values of the vertical gradients of all samples matching the angular mode in the reconstructed block.

In an example, when determining the horizontal gradients and vertical gradients of multiple samples in the reconstructed block, for example, a horizontal filter and a vertical filter may be set, and the horizontal filter and the vertical filter are slid in the reconstructed block in a set step size. At each position to which the horizontal filter and the vertical filter are slid, a horizontal gradient and a vertical gradient of a sample at a position where a center sample is located are determined, thereby obtaining horizontal gradients and vertical gradients of the multiple samples in the reconstructed block.

In an example, a horizontal gradient and a vertical gradient of each sample in the reconstructed block may be determined, or horizontal gradients and vertical gradients of multiple samples at specific positions in the reconstructed block may be determined. When determining a horizontal gradient and a vertical gradient of a sample, an inverse tangent function may be used to calculate a corresponding angle. Each angle may be converted into an angular mode, that is, an angular mode matched to the sample is obtained. The calculation of the angular mode accumulated amplitude may be done using the same method as the DIMD mode.

In an example of the embodiments, the intra prediction mode corresponding to the reconstructed block being determined according to the reconstructed sample of the reconstructed block includes:
partitioning the reconstructed block into multiple sub-blocks, and determining an intra prediction mode corresponding to each of the multiple sub-blocks respectively in a following manner:
determining horizontal gradients and vertical gradients of samples in a sub-block according to a reconstructed sample of the sub-block;
determining an angular mode matched to each sample according to a horizontal gradient and a vertical gradient of the sample; and
using an angular mode with a largest number of matches or an angular mode with a largest accumulated amplitude as an intra prediction mode corresponding to the sub-block;
where an accumulated amplitude of an angular mode is obtained by accumulating absolute values of the horizontal gradients and the absolute values of the vertical gradients of all samples matching the angular mode in the sub-block.

In this example, the reconstructed block is partitioned into multiple sub-blocks, an intra prediction mode corresponding to each sub-block is determines. Determining the horizontal gradients and vertical gradients of the samples in the sub-block may determine: a horizontal gradient and a vertical gradient of each sample in the sub-block, or horizontal gradients and vertical gradients of some samples (which may be one or more) at specific positions in the sub-block. The specific position may be, for example, a center sample position determined by a sliding filter. The specific determining method may be similar to that in the previous example, which will not be repeated here.

In an exemplary embodiment of the present disclosure, obtaining the intra prediction mode corresponding to the reconstructed block includes:
obtaining the intra prediction mode corresponding to the reconstructed block from a constructed intra prediction mode list, where the intra prediction mode list is configured to store an intra prediction mode corresponding to a reconstructed block according to a position of the reconstructed block; or
determining the intra prediction mode corresponding to the reconstructed block according to the reconstructed sample of the reconstructed block.

For the first manner, it is necessary to create an intra prediction list and fill (enter) in the intra prediction mode corresponding to the reconstructed block. The list may also be referred to as an intra prediction mode field (IPMF). After encoding or decoding a block (i.e., a reconstructed block is obtained), the intra prediction mode corresponding to the reconstructed block may be determined according to the reconstructed sample of the reconstructed block, and the determined intra prediction mode is stored in a position corresponding to the reconstructed block in the intra prediction mode list, but the present disclosure is not limited thereto, before deriving the intra prediction mode for the current block, it is also possible to determine the intra prediction mode corresponding to the reconstructed block according to the reconstructed sample of the reconstructed block. Here, the reconstructed block may be a reconstructed block at a position neighboring the current block. In a case where the current block is a chroma block, the reconstructed block may also be a luma block at a position corresponding to the chroma block. Usually, the chroma block is coded after coding the luma block. When encoding the chroma block, the luma block at the corresponding position has been encoded or decoded, that is, the luma block at the corresponding position of the chroma block is the reconstructed block.

In an exemplary embodiment of the present disclosure, after deriving the intra prediction mode of the current block based on the intra prediction mode corresponding to the reconstructed block, the method further includes: performing intra prediction on the current block according to the intra prediction mode used for the current block determined by deriving the intra prediction mode.

There may be multiple cases for deriving the intra prediction mode of the current block based on the intra prediction mode corresponding to the reconstructed block, and the intra prediction mode may be derived in different ways in different cases. For example, in a case where the MPM mode is used for the current block, deriving the intra prediction mode of the current block based on the intra prediction mode corresponding to the reconstructed block, may include the constructing process of the MPM list, that is, filling intra prediction modes corresponding to neighboring blocks in the reconstructed area around the current block into the MPM list. In a case where the current block is a chroma block for which the DM mode is used, deriving the intra prediction mode of the current block based on the intra prediction mode corresponding to the reconstructed block, may use an intra prediction mode corresponding to a luma block at the corresponding position of the current block as an intra prediction mode of a chroma block for intra prediction, or may derive the intra prediction mode of the chroma block based on the intra prediction mode corresponding to the luma block at the corresponding position of the current block. In the present disclosure, the method for deriving the intra prediction mode of the current block based on the intra prediction mode corresponding to the reconstructed block is not limited to the two manners. The method of the embodiments of the present disclosure may be used in any case where the intra prediction mode of the reconstructed block needs to be used during the encoding or decoding process of the current block.

A video decoding method is further provided in an embodiment of the present disclosure, as shown in FIG. 15, the video decoding method includes following steps.

In step S220, it is determined that an intra prediction mode of the current block needs to be derived based on a reconstructed sample.

According to information obtained by decoding, e.g., an MPM usage flag of the current block, it may be determined that the intra prediction mode of the current block needs to be derived based on the reconstructed sample.

In step S230, an intra prediction mode corresponding to a reconstructed block is obtained based on the intra prediction method described in any embodiment of the present disclosure, and the intra prediction mode of the current block is derived based on the intra prediction mode corresponding to the reconstructed block.

In step S240, intra prediction is performed on the current block according to the intra prediction mode used for the current block determined by deriving the intra prediction mode.

In the disclosed embodiment, the intra prediction mode corresponding to the reconstructed block determined based on the reconstructed sample is used to derive the intra prediction mode of the current block, and the intra prediction is performed on the current block according to the intra prediction mode used for the current block determined by deriving the intra prediction mode. In this way, the texture characteristics of the reconstructed block may be more accurately reflected, and the matching degree between the intra prediction mode derivation result and the texture characteristics of the current block may be improved, thereby improving the coding efficiency.

In an exemplary embodiment of the present disclosure, determining that the intra prediction mode of the current block needs to be derived based on the reconstructed sample includes: in a case of determining that a most probable mode (MPM) is used for the current block, determining that the intra prediction mode of the current block needs to be derived based on the reconstructed sample.

Obtaining the intra prediction mode corresponding to the reconstructed block and deriving the intra prediction mode of the current block based on the intra prediction mode corresponding to the reconstructed block includes: obtaining, according to a neighboring position coordinate of the current block, an intra prediction mode corresponding to a reconstructed block where the neighboring position coordinate is located or an intra prediction mode corresponding to a sub-block into which the reconstructed block where the neighboring position coordinate is located is partitioned; constructing an MPM list according to the obtained intra prediction mode; and determining the intra prediction mode used for the current block according to an MPM index obtained by decoding and the MPM list.

In the embodiments of the present disclosure, the MPM may be an original MPM list or a secondary MPM list.

In this embodiment, in a case where the reconstructed block is taken as a whole and an intra prediction mode corresponding to the reconstructed block is determined, the MPM list is constructed by obtaining the intra prediction mode corresponding to the reconstructed block where the neighboring position coordinate is located. In a case where the reconstructed block is partitioned into multiple sub-blocks and an intra prediction mode corresponding to each of the multiple sub-blocks is determined, the MPM list is constructed by obtaining the intra prediction mode corresponding to the sub-block into which the reconstructed block where the neighboring position coordinate is located is partitioned. The MPM index is an index of the intra prediction mode used for the current block in the MPM list. For example, after rate-distortion optimization, the encoding end determines that the intra prediction mode used for the current block is an angular mode with an index 5, and the angular mode with the index 5 is the 3rd intra prediction mode in the MPM list, the MPM index is 2. At the decoding end, it may be determined that the current block uses the angular mode with the index 5 based on the MPM index and the MPM list constructed using the same method.

In an exemplary embodiment of the present disclosure, determining that the intra prediction mode of the current block needs to be derived based on the reconstructed sample includes: in a case of determining that the current block is a chroma block for which a direct mode (DM) is used, determining that the intra prediction mode of the current block needs to be derived based on the reconstructed sample.

Obtaining the intra prediction mode corresponding to the reconstructed block and deriving the intra prediction mode of the current block based on the intra prediction mode corresponding to the reconstructed block includes: obtaining an intra prediction mode corresponding to a luma block at a corresponding position of the current block or an intra prediction mode corresponding to a sub-block into which the luma block is partitioned, and determining the obtained intra prediction mode as the intra prediction mode used for the current block.

In this embodiment, in a case where the position of the chroma block and the position of the luma block are the same, the luma block at the corresponding position of the chroma block is the luma block at the same position as the current block; in a case where the position of the chroma block and the position of the luma block are not exactly the same (for example, the chroma block is portion of the luma block), the luma block covering a specified sample in the chroma block may be used as the luma block (or a sub-block into which the luma block is partitioned) at the corresponding position of the chroma block, and the specified sample may be set to, for example, a central sample of the chroma block or a sample at other positions. In a case where an intra prediction mode corresponding to the luma block is determined when the luma block is taken as a whole, in the embodiments, the intra prediction mode corresponding to the luma block at the corresponding position of the current block is obtained, and in a case where the luma block is partitioned into multiple sub-blocks and an intra prediction mode of each sub-block is determined respectively, in the embodiments, the intra prediction mode corresponding to the sub-block into which the luma block at the corresponding position of the current block is partitioned is obtained.

In an exemplary embodiment of the present disclosure, no matter whether the intra prediction mode used for the reconstructed block is a conventional intra prediction mode or a non-conventional intra prediction mode, the intra prediction mode corresponding to the reconstructed block is determined according to the reconstructed sample of the reconstructed block.

In another exemplary embodiment of the present disclosure, before obtaining the intra prediction mode corresponding to the reconstructed block, the method further includes: determining the intra prediction mode used for the reconstructed block; and obtaining the intra prediction mode corresponding to the reconstructed block in a case where the prediction mode used for the reconstructed block is any one or more of following modes: an inter prediction mode, an MIP mode, an IntraTmp mode, a TIMD mode, a DIMD mode, a GPM mode, an AWP mode, an IBC mode, an IPF mode, or an MIPF mode. That is, in the embodiments, in a case where the prediction mode used for the reconstructed block is the specified prediction mode, the intra prediction mode corresponding to the reconstructed block is determined according to the reconstructed sample of the reconstructed block. If the prediction mode used for the reconstructed block is not the specified prediction mode, the intra prediction mode corresponding to the reconstructed block is not determined based on the reconstructed sample of the reconstructed block. If an intra prediction mode is used for the reconstructed block, the intra prediction mode used for the reconstructed block may be directly used to derive the intra prediction mode of the current block, such as constructing an MPM list.

In an example, a specified intra prediction mode includes an inter prediction mode. That is, in a case where the inter prediction mode is used for the reconstructed block, the intra prediction mode corresponding to the reconstructed block may also be obtained by using the method of the embodiments of the present disclosure, thus making it possible to derive the intra prediction mode of the current block using the intra prediction mode corresponding to the reconstructed block, thereby enriching available information of the current block and helping to improve coding efficiency. In another example, the specified intra prediction modes include the MIP mode and the IntraTmp mode; in another example, the specified intra prediction modes include the MIP mode, the IntraTmp mode, the TIMD mode and the DIMD mode. In another example, the specified intra prediction mode includes the AWP mode, the IBC mode, the IPF mode, and the MIPF mode. In another example, the specified intra prediction modes include the MIP mode, the IntraTmp mode, the TIMD mode, the DIMD mode, the GPM mode, the AWP mode, the IBC mode, the IPF mode, and the MIPF mode.

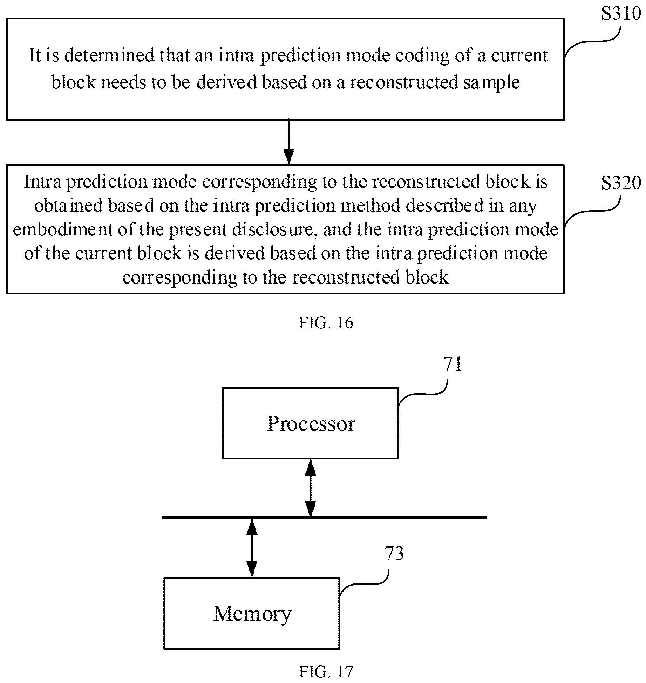

A video encoding method is further provided in an embodiment of the present disclosure, as shown in FIG. 16, the video encoding method further include following steps.

In step 310, it is determined that an intra prediction mode coding of a current block needs to be derived based on a reconstructed sample.

In step 320, an intra prediction mode corresponding to the reconstructed block is obtained based on the intra prediction method described in any embodiment of the present disclosure, and the intra prediction mode of the current block is derived based on the intra prediction mode corresponding to the reconstructed block.

In the embodiments of the present disclosure, the intra prediction mode corresponding to the reconstructed block determined based on the reconstructed sample is used to derive the intra prediction mode of the current block. In this way, the texture characteristics of the reconstructed block may be reflected more accurately, the matching degree between the intra prediction mode derivation result and the texture characteristics of the current block is improved, thereby improving the coding efficiency.

In an exemplary embodiment of the present disclosure, determining that the intra prediction mode coding of the current block needs to be derived based on the reconstructed sample includes: in a case of determining that a most probable mode (MPM) is used for the current block, determining that the intra prediction mode coding of the current block needs to be derived based on the reconstructed sample.

Obtaining the intra prediction mode corresponding to the reconstructed block and deriving the intra prediction mode of the current block based on the intra prediction mode corresponding to the reconstructed block includes: obtaining, according to a neighboring position coordinate of the current block, an intra prediction mode corresponding to a reconstructed block where the neighboring position coordinate is located or an intra prediction mode corresponding to a sub-block into which the reconstructed block where the neighboring position coordinate is located is partitioned; constructing an MPM list according to the obtained intra prediction mode; and encoding syntax elements of the MPM mode of the current block according to the intra prediction mode used for the current block and the MPM list.

In the embodiments, the intra prediction mode used for the current block is an intra prediction mode selected for the current block via rate-distortion optimization. In a case where the MPM list may be used for the current block, an index of the selected intra prediction mode in the MPM list (i.e., the MPM index) may be encoded, instead of directly encoding the intra prediction mode, as in the example above.

In an exemplary embodiment of the present disclosure, determining that the intra prediction mode coding of the current block needs to be derived based on the reconstructed sample includes: in a case where the current block is a chroma block for which a DM mode is capable of being used, determining that the intra prediction mode of the current block needs to be derived based on the reconstructed sample.

Obtaining the intra prediction mode corresponding to the reconstructed block and deriving the intra prediction mode of the current block based on the intra prediction mode corresponding to the reconstructed block includes: obtaining an intra prediction mode corresponding to a luma block at a position corresponding to the current block or an intra prediction mode corresponding to a sub-block into which the luma block is partitioned; performing intra prediction on the current block using the obtained intra prediction mode, to obtain a prediction block in a case where the DM mode is used for the current block; and performing rate-distortion optimization according to the obtained prediction block, to determine the intra prediction mode used for the current block.

In the embodiments, performing rate-distortion optimization according to the obtained prediction block is that: rate-distortion costs of the DM mode and other modes are calculated respectively, according to the prediction block in a case where the DM mode is used for the current block and the prediction block in a case where other modes is used for the current block. If the rate-distortion cost of the DM mode is the smallest, the DM mode is selected as the intra prediction mode used for the current block.

In an exemplary embodiment of the present disclosure, before obtaining the intra prediction mode corresponding to the reconstructed block, the method further includes: determining an intra prediction mode used for the reconstructed block; and obtaining the intra prediction mode corresponding to the reconstructed block in a case where the prediction mode used for the reconstructed block is any one or more of following modes: an inter prediction mode, an MIP mode, an IntraTmp mode, a TIMD mode, a DIMD mode, a GPM mode, an AWP mode, an IBC mode, an IPF mode, or an MIPF mode. The specific examples are illustrated above.

An intra prediction method is further provided in an embodiment of the present disclosure, which includes: after encoding or decoding a block, determining a corresponding intra prediction mode by analyzing information of a reconstructed sample of the block. Deriving intra prediction mode for the current block that is subsequently encoded or decoded may be performed according to the corresponding intra prediction mode.

In an embodiment, an intra prediction mode field (IPMF) may be constructed. Each time a block is encoded or decoded, information of a reconstructed sample of the block is analyzed to determine the intra prediction mode corresponding to the block, and the corresponding one or more intra prediction modes are stored to the IPMF. In a case where the intra prediction mode of the encoded or decoded reconstructed block needs to be used for a current block to be subsequently encoded or decoded, the corresponding intra prediction mode may be found from the IPMF according to a position of the reconstructed block. This is similar to the motion information field in inter prediction. The IPMF may also be understood as a list in matrix form, where each element in the matrix is a intra prediction mode corresponding to a reconstructed block at a corresponding position.

In another embodiment, when determining the intra prediction mode corresponding to the reconstructed block, the IPMF may not be used. As an alternative, in a case where an intra prediction mode of a neighboring block is needed to be use for the current block, the reconstructed block covering a neighboring position coordinate or the sub-block covering the neighboring position coordinate which partitioned by the reconstructed block, is found according to the neighboring position coordinate, and the corresponding intra prediction mode is derived according to the reconstructed sample in the reconstructed block or the reconstructed sample in the sub-block partitioned by the reconstructed block.

After obtaining the reconstructed sample of the reconstructed block, the intra prediction mode corresponding to the reconstructed block may be derived. It can be done in whole block or in sub-block. Taking performing deriving in sub-block as an example, one method is to partition the reconstructed block into multiple 4×4 sub-blocks, analyze each sub-block to calculate the gradient values of one or more samples in the sub-block. generally calculate horizontal gradients and vertical gradients, match to an intra prediction mode according to the two gradient values, comprehensively consider the frequency of occurrence or the accumulated amplitude of all matched intra prediction modes, to select an intra prediction mode with a largest number of occurrences or an intra prediction mode with a largest accumulated amplitude as the corresponding intra prediction mode, and store the intra prediction mode at the corresponding position in the IPMF.

When the current block is being encoded and decoded, the intra prediction mode of the reconstructed block at the corresponding position in the IPMF may be found, according to the required neighboring position coordinates, such as (x-1, y-1), (x-1, y+height), (x-1, y+height-1), (x+width, y-1), (x+width-1, y-1), as the intra prediction mode of the neighboring block to construct the MPM list, that is, the intra prediction mode of the reconstructed block is selected and is entered into the MPM list. In the existing method, the intra prediction mode used for performing intra prediction on the neighboring block is used as the intra prediction mode of the neighboring block, while in the embodiments, the intra prediction mode corresponding to the reconstructed block which is determined based on the reconstructed sample of the reconstructed block is used as the intra prediction mode of the neighboring block. If the reconstructed block is partitioned into multiple sub-blocks when determining the intra prediction mode corresponding to the reconstructed block, the reconstructed block may correspond to multiple different intra prediction modes, and the intra prediction mode corresponding to each sub-block is closer to the local texture.

In VVC, in a case where the corresponding neighboring block is encoded by intra coding and not be encoded in MIP mode, the intra prediction mode may be used to determine the MPM. In the method of the embodiments of the present disclosure, regardless of whether an intra prediction mode (i.e., intra coding) or an inter prediction mode (i.e., inter coding) is used for predicting the neighboring block, such as the MIP mode, the TIMD mode, the DIMD mode, the GPM mode, the AWP mode, the IBC mode, the IPF mode, the MIPF mode or the IntraTmp mode, its corresponding conventional intra prediction mode may be obtained. In this way, the more effective information may be obtained for current block.

The situation is similar for deriving intra prediction modes between components. For example, if a DM mode is used for a chroma block, it is necessary to find an intra prediction mode of a luma block at the corresponding position. In this case, the intra prediction mode corresponding to the luma block may be determined based on a reconstructed sample of the luma block, and the intra prediction mode corresponding to the luma block may be used to perform intra prediction on the chroma block.

In the embodiments, the intra prediction mode is determined by analyzing the reconstructed block. The determined intra prediction mode is more accurate than the intra prediction mode used for predicting reconstructed block, thereby improving the accuracy of using the determined intra prediction mode and enhancing compression efficiency.

An intra prediction apparatus is further provided in an embodiment of the present disclosure, as shown in FIG. 17, the intra prediction apparatus includes a processor 71 and a memory 73 storing a computer program, where when the computer program is executed by the processor 71, the intra prediction method as described in any embodiment of the present disclosure is implemented.

A video decoding apparatus is further provided in an embodiment of the present disclosure, as shown in FIG. 17, the video decoding apparatus includes a processor and a memory storing a computer program, where when the computer program is executed by the processor, the video decoding method as described in any embodiment of the present disclosure is implemented.

A video encoding apparatus is further provided in an embodiment of the present disclosure, as shown in FIG. 17, the video encoding apparatus includes a processor and a memory storing a computer program, where when the computer program is executed by the processor, the video encoding method as described in any embodiment of the present disclosure is implemented.

The processor in the embodiments of the present disclosure may be a general-purpose processor, including a central processing unit (CPU), a network processor (NP for short), a microprocessor, etc., or other conventional processors, etc.; the processor may also be a digital signal processor (DSP), an application specific integrated circuit (ASIC), a field programmable gate array (FPGA), discrete logic or other programmable logic devices, discrete gate or transistor logic devices, discrete hardware components, or other equivalent integrated or discrete logic circuits, or a combination of the above devices. That is, the processor in the above embodiments may be any processing device or device combination that implements the methods, steps and logic block diagrams in the embodiments of the present disclosure. If the embodiments of the present disclosure are partially implemented in software, instructions for the software may be stored in a suitable non-transitory computer-readable storage medium, and the instructions may be executed in hardware using one or more processors to implement the methods of the embodiments of the present disclosure. The term "processor" as used above may refer to the above structure or any other structure suitable for implementation of the techniques described herein.

A video coding system is further provided in an embodiment of the present disclosure, which includes the video encoding apparatus described in any embodiment of the present disclosure and the video decoding apparatus described in any embodiment of the present disclosure.

A non-volatile (non-transitory) computer-readable storage medium is further provided in an embodiment of the present disclosure, where the computer-readable storage medium stores a computer program, where when the computer program is executed by a processor, the intra prediction method as described in any embodiment of the present disclosure can be implemented, or the video decoding method as described in any embodiment of the present disclosure can be implemented, or the video encoding method as described in any embodiment of the present disclosure can be implemented.

A computer program product is further provided in an embodiment of the present disclosure, which includes a computer program, where when the computer program is executed by a processor, the intra prediction method as described in any embodiment of the present disclosure can be implemented, or the video decoding method as described in any embodiment of the present disclosure can be implemented, or the video encoding method as described in any embodiment of the present disclosure can be implemented.

In one or more of the above exemplary embodiments, the functions described may be implemented in hardware, software, firmware, or any combination thereof. If the functions are implemented in software, the functions may be stored on or transmitted via, as one or more instructions or code, a computer-readable medium, and the functions may be executed by a hardware-based processing unit. Computer-readable medium may include computer-readable storage medium corresponding to physical media, e.g., a data storage medium, or communication medium including any medium that facilitates transfer of a computer program from one place to another place, e.g., according to a communication protocol transferring the computer program. In this manner, the computer-readable medium may generally correspond to a non-transitory tangible computer-readable storage medium or a communication medium such as a signal or a carrier. The data storage medium may be any available medium that can be accessed by one or more computers or one or more processors to retrieve instructions, code and/or data structures for implementing the techniques described in the present disclosure. A computer program product may include a computer-readable medium.

By way of example and not as a limitation, the computer-readable storage medium may include RAM, ROM, EEPROM, CD-ROM or other optical disk storage apparatuses, magnetic disk storage apparatuses or other magnetic storage apparatuses, a flash memory, or any other media that can be used to store the desired program code in the form of instructions or data structures and that can be accessed by a computer. Furthermore, any connection may be referred to as a computer-readable medium. For example, if instructions are transmitted from a website, server, or other remote source using a coaxial cable, fiber optic cable, twisted pair, digital subscriber line (DSL), or wireless technologies such as infrared, radio, and microwave, the coaxial cable, fiber optic cable, twisted pair, DSL, or wireless technologies such as infrared, radio, and microwave are included in the definition of the medium. However, it should be understood that the computer-readable storage medium and the data storage medium do not include connections, carriers, signals, or other transient (transitory) media, but are instead directed to non-transitory physical storage medium. As used herein, the disk usually reproduces data in a magnetic manner, the disc, including a compact disc (CD), a laser disc, an optical disc, a digital versatile disc (DVD), a floppy disk, or a Blu-ray disc, etc., reproduces data optically with lasers. Combinations of the above should also be included within the scope of the computer-readable medium.

In some aspects, the functionality described herein may be provided within dedicated hardware and/or software modules configured for encoding and decoding, or incorporated in a combined encoding end or a combined decoding end. Also, the techniques could be fully implemented in one or more circuits or logic elements.

The technical solutions of the embodiments of the present disclosure may be implemented in a wide variety of apparatuses or devices, including a wireless mobile phone, an integrated circuit (IC), or a group of ICs (e.g., a chipset). Various components, modules, or units described in the embodiments of the present disclosure are to emphasize functional aspects of apparatuses configured to perform the described techniques, but do not necessarily need to be realized by different hardware units, but rather that, as described above, the various units may be combined in a hardware unit of a encoding end or a decoding end, or may be provided by a collection of interoperating hardware units (including one or more processors as described above) in conjunction with appropriate a software and/or a firmware.

## Claims

1. An intra prediction method, comprising:
obtaining an intra prediction mode corresponding to a reconstructed block, wherein the intra prediction mode corresponding to the reconstructed block is determined according to a reconstructed sample of the reconstructed block, and the reconstructed block is an encoded block or a decoded block; and
deriving an intra prediction mode of a current block based on the intra prediction mode corresponding to the reconstructed block.

2. The method according to claim 1, wherein
the intra prediction mode corresponding to the reconstructed block being determined according to the reconstructed sample of the reconstructed block comprises:
taking the reconstructed block as a whole, and determining an intra prediction mode corresponding to the reconstructed block according to the reconstructed sample of the reconstructed block; or
partitioning the reconstructed block into multiple sub-blocks, and determining an intra prediction mode corresponding to each of the multiple sub-blocks respectively according to reconstructed samples of the multiple sub-blocks.

3. The method according to claim 2, wherein
partitioning the reconstructed block into the multiple sub-blocks comprises: in a case where a size of the reconstructed block is N times of 4×4, partitioning the reconstructed block into multiple sub-blocks of size 4×4, wherein N ≥ 2.

4. The method according to claim 1, wherein
the intra prediction mode corresponding to the reconstructed block is an angular mode.

5. The method according to claim 4, wherein
the intra prediction mode corresponding to the reconstructed block being determined according to the reconstructed sample of the reconstructed block comprises:
determining horizontal gradients and vertical gradients of multiple samples in the reconstructed block according to the reconstructed sample of the reconstructed block;
determining an angular mode to which each of the multiple samples matches according to the horizontal gradients and the vertical gradients of the multiple samples; and
using an angular mode with a largest number of matches or an angular mode with a largest accumulated amplitude as an intra prediction mode corresponding to the reconstructed block;
wherein an accumulated amplitude of an angular mode is obtained by accumulating absolute values of the horizontal gradients and absolute values of the vertical gradients of all samples matching the angular mode in the reconstructed block.

6. The method according to claim 4, wherein
the intra prediction mode corresponding to the reconstructed block being determined according to the reconstructed sample of the reconstructed block comprises:
partitioning the reconstructed block into multiple sub-blocks, and determining an intra prediction mode corresponding to each of the multiple sub-blocks respectively in a following manner:
determining horizontal gradients and vertical gradients of samples in a sub-block according to a reconstructed sample of the sub-block;
determining an angular mode matched to each sample according to a horizontal gradient and a vertical gradient of the sample; and
using an angular mode with a largest number of matches or an angular mode with a largest accumulated amplitude as an intra prediction mode corresponding to the sub-block;
wherein an accumulated amplitude of an angular mode is obtained by accumulating absolute values of the horizontal gradients and absolute values of the vertical gradients of all samples matching the angular mode in the sub-block.

7. The method according to claim 1, wherein
obtaining the intra prediction mode corresponding to the reconstructed block comprises:
obtaining the intra prediction mode corresponding to the reconstructed block from a constructed intra prediction mode list, wherein the intra prediction mode list is configured to store an intra prediction mode corresponding to a reconstructed block according to a position of the reconstructed block; or
determining the intra prediction mode corresponding to the reconstructed block according to the reconstructed sample of the reconstructed block.

8. The method according to claim 1, wherein
after deriving the intra prediction mode of the current block based on the intra prediction mode corresponding to the reconstructed block, the method further comprises: performing intra prediction on the current block according to the intra prediction mode used for the current block determined by deriving the intra prediction mode.

9. A video decoding method, comprising:
determining that an intra prediction mode of a current block needs to be derived based on a reconstructed sample;
obtaining an intra prediction mode corresponding to a reconstructed block based on the method according to any one of claims 1 to 7, and deriving the intra prediction mode of the current block based on the intra prediction mode corresponding to the reconstructed block; and
performing intra prediction on the current block according to the intra prediction mode used for the current block determined by deriving the intra prediction mode.

10. The method according to claim 9, wherein
determining that the intra prediction mode of the current block needs to be derived based on the reconstructed sample comprises: in a case of determining that a most probable mode (MPM) is used for the current block, determining that the intra prediction mode of the current block needs to be derived based on the reconstructed sample; and
obtaining the intra prediction mode corresponding to the reconstructed block and deriving the intra prediction mode of the current block based on the intra prediction mode corresponding to the reconstructed block comprises: obtaining, according to a neighboring position coordinate of the current block, an intra prediction mode corresponding to a reconstructed block where the neighboring position coordinate is located or an intra prediction mode corresponding to a sub-block into which the reconstructed block where the neighboring position coordinate is located is partitioned; constructing an MPM list according to the obtained intra prediction mode; and determining the intra prediction mode used for the current block according to an MPM index obtained by decoding and the MPM list.

11. The method according to claim 9, wherein
determining that the intra prediction mode of the current block needs to be derived based on the reconstructed sample comprises: in a case of determining that the current block is a chroma block for which a direct mode (DM) is used, determining that the intra prediction mode of the current block needs to be derived based on the reconstructed sample; and
obtaining the intra prediction mode corresponding to the reconstructed block and deriving the intra prediction mode of the current block based on the intra prediction mode corresponding to the reconstructed block comprises: obtaining an intra prediction mode corresponding to a luma block at a corresponding position of the current block or an intra prediction mode corresponding to a sub-block into which the luma block is partitioned, and determining the obtained intra prediction mode as the intra prediction mode used for the current block.

12. The method according to claim 9, wherein
before obtaining the intra prediction mode corresponding to the reconstructed block, the method further comprises:
determining an intra prediction mode used for the reconstructed block; and obtaining the intra prediction mode corresponding to the reconstructed block in a case where the prediction mode used for the reconstructed block is any one or more of following modes: an inter prediction mode, an MIP mode, an IntraTmp mode, a TIMD mode, a DIMD mode, a GPM mode, an AWP mode, an IBC mode, an IPF mode, or an MIPF mode.

13. A video encoding method, comprising:
determining that an intra prediction mode coding of a current block needs to be derived based on a reconstructed sample; and
obtaining an intra prediction mode corresponding to a reconstructed block based on the method according to any one of claims 1 to 7, and deriving an intra prediction mode of the current block based on the intra prediction mode corresponding to the reconstructed block.

14. The method according to claim 13, wherein
determining that the intra prediction mode coding of the current block needs to be derived based on the reconstructed sample comprises: in a case of determining that a most probable mode (MPM) is used for the current block, determining that the intra prediction mode coding of the current block needs to be derived based on the reconstructed sample; and
obtaining the intra prediction mode corresponding to the reconstructed block and deriving the intra prediction mode of the current block based on the intra prediction mode corresponding to the reconstructed block comprises: obtaining, according to a neighboring position coordinate of the current block, an intra prediction mode corresponding to a reconstructed block where the neighboring position coordinate is located or an intra prediction mode corresponding to a sub-block into which the reconstructed block where the neighboring position coordinate is located is partitioned; constructing an MPM list according to the obtained intra prediction mode; and encoding syntax elements of the MPM mode of the current block according to the intra prediction mode used for the current block and the MPM list.

15. The method according to claim 13, wherein
determining that the intra prediction mode coding of the current block needs to be derived based on the reconstructed sample comprises: in a case where the current block is a chroma block for which a DM mode is capable of being used, determining that the intra prediction mode of the current block needs to be derived based on the reconstructed sample;
obtaining the intra prediction mode corresponding to the reconstructed block and deriving the intra prediction mode of the current block based on the intra prediction mode corresponding to the reconstructed block comprises: obtaining an intra prediction mode corresponding to a luma block at a position corresponding to the current block or an intra prediction mode corresponding to a sub-block into which the luma block is partitioned; performing intra prediction on the current block using the obtained intra prediction mode, to obtain a prediction block in a case where the DM mode is used for the current block; and performing rate-distortion optimization according to the obtained prediction block, to determine the intra prediction mode used for the current block.

16. The method according to claim 13, wherein
before obtaining the intra prediction mode corresponding to the reconstructed block, the method further comprises:
determining an intra prediction mode used for the reconstructed block; and obtaining the intra prediction mode corresponding to the reconstructed block in a case where the prediction mode used for the reconstructed block is any one or more of following modes: an inter prediction mode, an MIP mode, an IntraTmp mode, a TIMD mode, a DIMD mode, a GPM mode, an AWP mode, an IBC mode, an IPF mode, or an MIPF mode.

17. An intra prediction apparatus, comprising a processor and a memory storing a computer program, wherein when the computer program is executed by the processor, the intra prediction method according to any one of claims 1 to 8 is implemented.

18. A video decoding apparatus, comprising a processor and a memory storing a computer program, wherein when the computer program is executed by the processor, the video decoding method according to any one of claims 9 to 12 is implemented.

19. A video encoding apparatus, comprising a processor and a memory storing a computer program, wherein when the computer program is executed by the processor, the video encoding method according to any one of claims 13 to 16 is implemented.

20. A video coding system, comprising the video encoding apparatus according to claim 18 and the video decoding apparatus according to claim 18.

21. A non-transitory computer-readable storage medium, storing a computer program, wherein when the computer program is executed by a processor, the intra prediction method according to any one of claims 1 to 8 is implemented, or the video decoding method according to any one of claims 9 to 12 is implemented, or the video encoding method according to any one of claims 13 to 16 is implemented.

22. A computer program product, comprising a computer program, wherein when the computer program is executed by a processor, the intra prediction method according to any one of claims 1 to 8 is implemented, or the video decoding method according to any one of claims 9 to 12 is implemented, or the video encoding method according to any one of claims 13 to 16 is implemented.
